# EUROPÄISCHE PATENTSCHRIFT

(11) **EP 2 344 298 B1**
(45) Veröffentlichungstag und Bekanntmachung des Hinweises auf die Patenterteilung: **03.10.2012**
(21) Anmeldenummer: 09771689.8
(22) Anmeldetag: 07.11.2009
(51) Int. Cl.: B23P 6/00, F01D 5/34, B23K 15/00, B23K 20/12, F01D 5/00

(54) **VERFAHREN ZUM AUSTAUSCH EINES INNEREN SCHEIBENELEMENTS EINER INTEGRAL BESCHAUFELTEN SCHEIBE**
METHOD FOR REPLACING AN INNER DISK ELEMENT OF AN INTEGRALLY BLADED DISK
PROCÉDÉ DE REMPLACEMENT D'UN ÉLÉMENT INTÉRIEUR DE DISQUE SUR UN DISQUE À AUBAGE INTÉGRAL

(30) Priorität: 13.11.2008 DE 102008057160
(43) Veröffentlichungstag der Anmeldung: 20.07.2011
(73) Patentinhaber: MTU Aero Engines GmbH, 80995 München (DE)
(72) Erfinder: BAYER, Erwin, 85221 Dachau (DE); RICHTER, Karl-Hermann, 85229 Markt Indersdorf (DE)
(86) Internationale Anmeldenummer: PCT/DE2009/001581
(87) Internationale Veröffentlichungsnummer: WO 2010/054634

(56) Entgegenhaltungen:
- DE-A1- 2 442 739
- DE-A1- 10 340 823
- DE-A1-102006 022 164
- US-A1- 2003 223 873

## Beschreibung

Die vorliegende Erfindung betrifft ein Verfahren zum Austausch eines inneren Scheibenelements einer integral beschaufelten Scheibe, einer sogenannten BLISK (blade integrated disk). Hierbei steht die integral beschaufelte Scheibe (BLISK) auch synonym für einen integral beschaufelten Ring, einen sogenannten BLING (blade integrated ring).

### STAND DER TECHNIK

Das Dokument DE 103 40 823 A1 beschreibt ein Verfahren zur Reparatur einer integral beschaufelten Scheibe, wobei die integral beschaufelte Scheibe im Fügebereich zwischen dem inneren Scheibenelement und der Basis der Schaufeln eine Vielzahl von Aussparungen in Form von axialen Durchganssbohrungen aufweist.

Aus dem Dokument DE 10 2006 022 164 A1 ist es bekannt, ein Rotorelement (BLISK oder BLING) für eine fertigungstechnische Bearbeitung mit hoher mechanischer Belastung auszusteifen. Dies ist insbesondere deshalb erforderlich, da das Rotorelement für seinen Einsatz dimensioniert ist und während der Fertigung bzw. Bearbeitung (z.B. Reparatur) Belastungen auftreten können, die größer als die Belastungen während des Einsatzes sind. Daher ist es möglich, dass das Rotorelement bei einer Bearbeitung unerwünscht verformt wird. Das vorstehend genannte Dokument sieht daher ein Verfahren zum Aussteifen solcher Bauteile vor, um unerwünschte Verformungen zu verhindern oder zumindest weitestgehend einzuschränken.

Allerdings eignet sich dieses Verfahren nur zur Aussteifung von Rotorelementen mit einem ganz speziellen Aufbau. Genauer gesagt eignet sich dieses Verfahren nur zur Aussteifung von umlaufenden Aussparungen in der Turbinenblisk mit einer radial außen liegenden Begrenzungswand.

Die derzeit eingesetzten BLISKs und BLINGs hingegen weisen zumeist axiale Bohrungen auf, sogenannte Entlastungsbohrungen, die einerseits der Gewichtsersparnis und andererseits der besseren Belüftung dienen. Die Gewichtsersparnis ist insbesondere bei solchen Rotorelementen wichtig, die in Flugzeugturbinen eingesetzt werden.

Bei dem derzeitigen Aufbau von Turbinenblisks wird ein EB-geschweißter Schaufelkranz durch Elektronenstrahlschweißen auf eine Nabe gefügt. Im Bereich der Fügezone am Schaufelkranz und entlang der Axialnaht werden dann die Entlastungsbohrungen eingebracht. Diese Entlastungsbohrungen würden ein erneutes Fügen mittels Elektronenstrahlschweißen bei einer Reparatur behindern.

Turbinenblisks werden heutzutage zumeist aus zwei unterschiedlichen Materialien für das innere Scheibenelement und den Schaufelkranz hergestellt. Das innere Scheibenelement hat üblicherweise einen geringeren Wert als der Schaufelkranz und ist bezüglich seiner Lebensdauer beschränkt. Demgegenüber ist der Schaufelkranz als Bauteil der Klasse 2 in seiner Lebensdauer nicht begrenzt.

Die Aufgabe der vorliegenden Erfindung ist es daher, ein Verfahren bereitzustellen, mit dessen Hilfe bei Turbinenblisks, welche axiale Entlastungsbohrungen aufweisen, das innere Scheibenelement ausgewechselt werden kann.

Die Aufgabe der Erfindung wird mit dem Verfahren gemäß Anspruch 1 gelöst. Vorteilhafte Weiterentwicklungen des erfindungsgemäßen Verfahrens sind Gegenstand der abhängigen Ansprüche.

### ZUSAMMENFASSUNG DER ERFINDUNG

Das Verfahren zum Austausch eines inneren Scheibenelements einer integral beschaufelten Scheibe, wobei die integral beschaufelte Scheibe im Fügebereich eine Vielzahl von Aussparungen in Form von axialen Durchgangsbohrungen aufweist, hat folgenden Ablauf. Zuerst werden die axialen Durchgangsbohrungen der integral beschaufelten Scheibe aufgefüllt und das innere Scheibenelement der radial beschaufelten Scheibe aus dem verbleibenden Schaufelkranz herausgetrennt. Danach wird ein neues inneres Scheibenelement in den verbleibenden Schaufelkranz eingesetzt und das neue innere Scheibenelement und der verbleibende Schaufelkranz gefügt. Anschließend werden die axialen Durchgangsbohrungen wiederhergestellt.

Das erfindungsgemäße Verfahren hat den Vorteil, dass bei Abnutzung des inneren Scheibenelements der integral beschaufelten Scheibe (BLISK) nicht das gesamte Bauteil ersetzt werden muss, sondern das relativ günstige innere Scheibenelement ersetzt werden kann und der relativ teure Schaufelkranz weiter benutzt werden kann. Es wird noch einmal darauf hingewiesen, dass die integral beschaufelte Scheibe (BLISK) auch synonym für einen integral beschaufelten Ring (BLING) steht. In diesem Fall wird anstelle des inneren Scheibenelements natürlich der innere Ring herausgetrennt und ausgetauscht.

Vorteilhafterweise wird bei dem vorstehenden Verfahren das Auffüllen der axialen Durchgangsbohrungen durch ein Einsetzen eingeschrumpfter Formteile und das Wiederherstellen der axialen Durchgangsbohrungen durch Herausnehmen der eingesetzten Formteile bewirkt.

Dadurch kann das Auffüllen der Durchgangsbohrungen sehr schnell und kostengünstig bewirkt werden. Die Formteile können entweder individuell für die jeweilige BLISK angefertigt oder standardisiert vorgehalten werden. Es können auch unterschiedlich geformte Durchgangsbohrungen in der integral beschaufelten Scheibe vorgesehen sein, so dass dementsprechend unterschiedlich geformte Formteile benötigt werden.

Vorteilhafterweise sind bei dem vorstehenden Verfahren die Formteile aus demselben Material wie das innere Scheibenelement ausgebildet.

In diesem Fall sind die Materialeigenschaften über die gesamte Trennfuge (und später Fügefuge) hinweg identisch, was die Bearbeitung vereinfacht. Dies gilt insbesondere für den Wärmeausdehnungskoeffizienten, so dass auch bei einer Erwärmung der integral beschaufelten Scheibe z.B. während des Fügens keine Spannungen oder Spalte im Bereich der Formteile entstehen.

Weiter Vorteilhafterweise wird bei dem vorstehenden Verfahren das Auffüllen der axialen Durchgangsbohrungen mit Hilfe des Verfahrens der kaltkinetischen Kompaktierung bewirkt. Zudem wird das Wiederherstellen der axialen Durchgangsbohrungen bewirkt, indem sie neu gebohrt werden.

Mit Hilfe des Verfahrens der kaltkinetischen Kompaktierung können die Durchgangsbohrungen aufgefüllt werden, ohne dass in der integral beschaufelten Scheibe große thermische Spannungen erzeugt werden. Dadurch wird eine thermische Verformung bzw. Verspannung der integral beschaufelten Scheibe weitestgehend verhindert. Vorteilhafterweise erfolgt bei dem vorstehenden Verfahren vor dem Einsetzen des neuen inneren Scheibenelements in den verbleibenden Schaufelkranz eine Feinbearbeitung der Fügezone.

Dieser Schritt ist insbesondere dann vorteilhaft, wenn die integral beschaufelte Scheibe einen Überzug aus einem vom Kernmaterial verschiedenen Material aufweist. Beim Heraustrennen können dann beispielsweise Späne des Deckmaterials entstehen, die dann im Bereich des Kernmaterials anhaften. Ohne eine Feinbearbeitung der Fügezone wäre es auf diese Weise theoretisch möglich, dass Einschlüsse des Deckmaterials im Kernmaterial der integral beschaufelten Scheibe entstehen, die die Festigkeit oder die Dauerhaftigkeit nachteilig beeinflussen können. Dies kann durch eine Feinbearbeitung der Fügezone zuverlässig verhindert werden.

Vorteilhafterweise wird bei dem vorstehenden Verfahren das Fügen des neuen inneren Scheibenelements und des verbleibenden Schaufelkranzes mittels Elektronenstrahlschweißen oder Rotationsreibschweißen bewirkt.

Diese Fügeverfahren sind besonders geeignet, da sie mit relativ geringer Erwärmung der integral beschaufelten Scheibe einhergehen. Zudem sind diese Erwärmungen lokal stark begrenzt. Dadurch kann eine aufwändige und umfangreiche Nachbearbeitung der integral beschaufelten Scheibe vermieden werden.

### KURZE BESCHREIBUNG DER FIGUREN

Die vorliegende Erfindung sowie ihre vorteilhaften Weiterentwicklungen sind unter Bezugnahme auf die beiliegenden Figuren besser verständlich
Fig. 1 ist eine perspektivische Schnittansicht einer integral beschaufelten Scheibe; und
Fig. 2 ist eine perspektivische Schnittansicht einer integral beschaufelten Scheibe, bei der eine Durchgangsbohrung aufgefüllt ist.

### AUSFÜHRLICHE BESCHREIBUNG EINES BEVORZUGTEN AUSFÜHRUNGSBEISPIELS

Im Folgenden ist ein Ausführungsbeispiel des erfindungsgemäßen Verfahrens beschrieben.

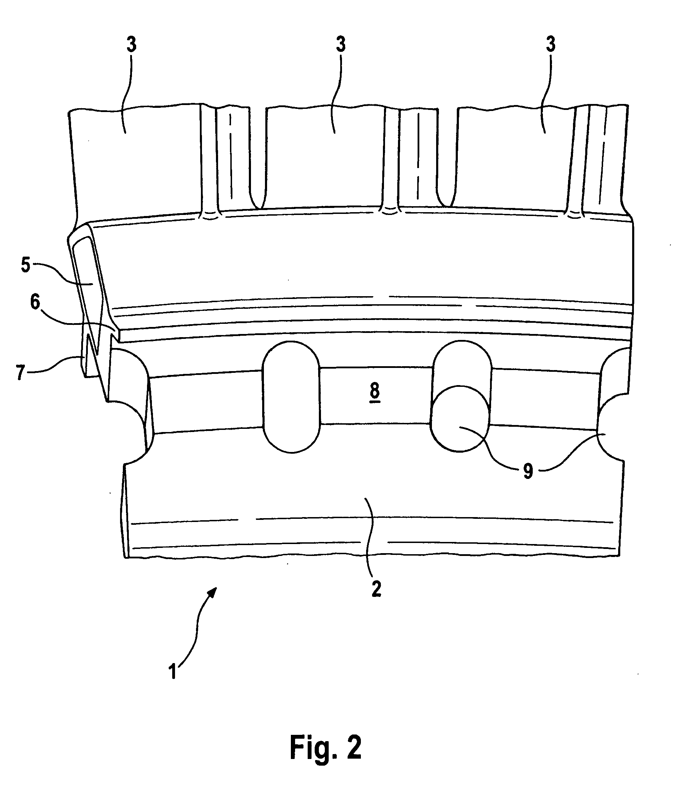

Die integral beschaufelte Scheibe 1 dieses Ausführungsbeispiels besteht aus einem inneren Scheibenelement 2 und Schaufeln 3. Das innere Scheibenelement 2 weist zudem noch einen axialen Vorsprung 4 auf. Die Schaufeln 3 sind an ihrer Basis 5, welche mit zwei Vorsätzen 6, 7 versehen ist, mit dem inneren Scheibenelement 2 in einem Fügebereich 8 verbunden. Im Fügebereich 8 zwischen innerem Scheibenelement 2 und Basis 5 der Schaufeln 3 sind axiale Durchgangsbohrungen 9 vorgesehen, welche als Entlastungsbohrungen dienen. In der Fig. 2 ist eine der Durchgangsbohrungen 9 aufgefüllt. Der Begriff Fügebereich umschreibt den Bereich, in dem sich die Durchgangsbohrungen 9 befinden, wohingegen der Begriff Fügezone nur den Bereich umfasst, der direkt durch den Fügevorgang beeinflusst wird, also beispielsweise der Bereich, in dem eine Schweißnaht ausgeführt wird.

Das erfindungsgemäße Verfahren gemäß diesem Ausführungsbeispiel läuft folgendermaßen ab.

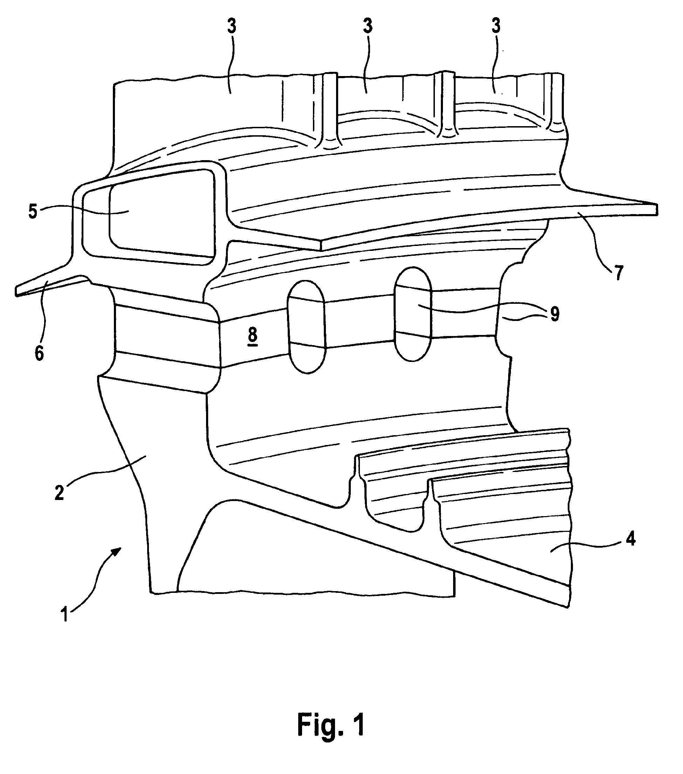

Bei der in der Fig. 1 dargestellten integral beschaufelten Scheibe 1 werden die axialen Durchgangsbohrungen 9 mit Hilfe des Verfahrens der kaltkinetischen Kompaktierung aufgefüllt, wie dies für eine axiale Durchgangsbohrung 9 in der Fig. 2 gezeigt ist. Bei diesem Verfahren, das auch als K3-Verfahren bzw. als Coldspray-Verfahren bezeichnet wird, wird ein Spritzzusatzstoff auf eine so hohe Geschwindigkeit beschleunigt, dass die kinetische Energie des Spritzzusatzstoffs alleine zur Ausbildung eines dichten Schichtverbundes auf dem Werkstück ausreicht, wenn der Spritzzusatzstoff auf das Werkstück auftrifft. Dementsprechend kann auf die Zufuhr von Wärme vollständig verzichtet werden, wodurch die Forderungen nach oxidarmen Schichten erfüllt werden können, da aufgrund der niedrigen Temperaturen keine Reaktion der Werkstoffe mit Umgebungsgasen erfolgt.

Nach dem Auffüllen der axialen Durchgangsbohrungen 9 im Fügebereich 8 wird das innere Scheibenelement 2 der radial beschaufelten Scheibe 1 aus dem verbleibenden Schaufelkranz 3, 5, 6, 7 mit Hilfe eines beliebigen bekannten Trennverfahrens herausgetrennt. Besonders bevorzugt sind hierbei Trennverfahren, die ohne großen Wärmeeintrag in die integral beschaufelte Scheibe 1 auskommen, da dadurch eine Verformung der integral beschaufelten Scheibe 1 klein gehalten werden kann.

Bei diesem Ausführungsbeispiel erfolgt anschließend an das Heraustrennen des inneren Scheibenelements 2 eine Feinbearbeitung der Fügezone. Die Fügezone entspricht hierbei der Trennfläche des Schaufelkranzes 3, 5, 6, 7 und der entsprechenden Fläche des neu einzusetzenden inneren Scheibenelements 2.

Danach wird das neue innere Scheibenelement 2 in den verbleibenden Schaufelkranz 3, 5, 6, 7 eingesetzt und exakt positioniert.

Das darauf folgende Fügen des neuen inneren Scheibenelements 2 und des verbleibenden Schaufelkranzes 3, 5, 6, 7 wird bei diesem Ausführungsbeispiel mittels Elektronenstrahlschweißen (auch als EB-Schweißen bezeichnet) bewirkt. Alternativ dazu kann aber auch ein Reibschweißverfahren zum Einsatz kommen, zum Beispiel das Rotationsreibschweißen.

Zuletzt werden die axialen Durchgangsbohrungen 9 in dem Fügebereich 8 wiederhergestellt, indem sie an denselben Stellen neu gebohrt werden. Dieser Schritt erfolgt in gleicher Weise wie bei einer Neuherstellung einer integral beschaufelten Scheibe 1.

Durch das vorstehend beschriebene Verfahren wurde eine integral beschaufelte Scheibe 1 bzw. bei diesem Ausführungsbeispiel eine Turbinenblisk 1 einer Flugzeugturbine in relativ kurzer Zeit zu geringen Kosten repariert.

Diese Reparaturmöglichkeit ist eine wichtige Voraussetzung für die Akzeptanz einer Turbinenblisk 1 beim Kunden. Für den Hersteller bzw. Reparateur hat das erfindungsgemäße Verfahren zudem den Vorteil, dass nach dem Auffüllen der Entlastungsbohrungen 9 und dem Heraustrennen der Scheibe 2 wieder auf den Standardprozess der Neuteilherstellung zurückgegriffen werden kann. Auf diese Weise verkürzt sich auch die Entwicklungszeit für die Reparatur. Eine Wiederverwendung des Vorrichtungskonzeptes ist möglich.

Bei dem Verfahren des kaltkinetischen Kompatkierens wird der Turbinenblisk 1 zudem thermisch nur sehr gering belastet (< 200°C), weshalb kein Verzug am Turbinenblisk 1 auftritt. zudem ist die durch dieses Verfahren erzeugte Schicht dicht, so dass die Werkstoffeigenschaften über den gesamten Umfang beim Wiederverbinden konstant bleiben.

Dieses Ausführungsbeispiel ist nicht dazu gedacht, den Umfang der vorliegenden Erfindung, der durch die Patentansprüche definiert wird, zu beschränken, sondern dient vielmehr der bloßen Veranschaulichung des erfindungsgemäßen Verfahrens.

## Patentansprüche

1. Verfahren zum Austausch eines inneren Scheibenelements (2) einer integral beschaufelten Scheibe (1), wobei die integral beschaufelte Scheibe (1) im Fügebereich (8) eine Vielzahl von Aussparungen (9) in Form von axialen Durchgangsbohrungen (9) aufweist, mit den folgenden Schritten:
Auffüllen der axialen Durchgangsbohrungen (9),
Heraustrennen eines inneren Scheibenelements (2) der integral beschaufelten Scheibe (1) aus dem verbleibenden Schaufelkranz (3, 5, 6, 7),
Einsetzen eines neuen inneren Scheibenelements (2) in den verbleibenden Schaufelkranz (3, 5, 6, 7),
Fügen des neuen inneren Scheibenelements (2) und des verbleibenden Schaufelkranzes (3, 5, 6, 7),
Wiederherstellen der axialen Durchgangsbohrungen (9).

2. Verfahren gemäß Anspruch 1, wobei
das Auffüllen der axialen Durchgangsbohrungen (9) durch ein Einsetzen von Formteilen bewirkt wird, und
das Wiederherstellen der axialen Durchgangsbohrungen (9) durch Herausnehmen der eingesetzten Formteile bewirkt wird.

3. Verfahren gemäß Anspruch 2, wobei
die in die axialen Durchgangsbohrungen (9) eingesetzten Formteile eingeschrumpfte Formteile sind.

4. Verfahren gemäß Anspruch 2 oder, wobei
die Formteile aus demselben Material wie das innere Scheibenelement (2) ausgebildet sind.

5. Verfahren gemäß Anspruch 1, wobei
das Auffüllen der axialen Durchgangsbohrungen (9) mit Hilfe des Verfahrens der kaltkinetischen Kompaktierung bewirkt wird.

6. Verfahren gemäß einem der Ansprüche 1 oder 5, wobei
das Wiederherstellen der axialen Durchgangsbohrungen (9) bewirkt wird, indem sie neu gebohrt werden.

7. Verfahren gemäß einem der vorangehenden Ansprüche, wobei vor dem Einsetzen des neuen inneren Scheibenelements (2) in den verbleibenden Schaufelkranz (3, 5, 6, 7) eine Feinbearbeitung der Fügezone erfolgt.

8. Verfahren gemäß einem der vorangehenden Ansprüche, wobei das Fügen des neuen inneren Scheibenelements (2) und des verbleibenden Schaufelkranzes (3, 5, 6, 7) mittels Elektronenstrahlschweißen oder Rotationsreibschweißen bewirkt wird.

## Claims

1. Method for replacing an inner disk element (2) of an integrally bladed disk (1), wherein the integrally bladed disk (1) in the joining region (8) has a plurality of recesses (9) in the form of axial through-bores (9), having the following steps:
filling up the axial through-bores (9),
separating out an inner disk element (2) of the integrally bladed disk (1) from the remaining blade ring (3, 5, 6, 7),
inserting a new inner disk element (2) into the remaining blade ring (3, 5, 6, 7),
joining the new inner disk element (2) and the remaining blade ring (3, 5, 6, 7),
restoring the axial through-bores (9).

2. Method according to claim 1, wherein
the filling up of the axial through-bores (9) is effected by inserting shaped portions, and
the restoration of the axial through-bores (9) is effected by removing the inserted shaped portions.

3. Method according to claim 2, wherein
the shaped portions inserted into the axial through-bores (9) are shrunken shaped portions.

4. Method according to claim 2 or, wherein
the shaped portions are formed from the same material as the inner disk element (2).

5. Method according to claim 1, wherein
the filling up of the axial through-bores (9) is effected with the aid of the cold-kinetic compacting method.

6. Method according to one of claims 1 or 5, wherein the restoration of the axial through-bores (9) is effected by boring them anew.

7. Method according to one of the preceding claims, wherein fine machining of the joining zone takes place prior to the insertion of the new inner disk element (2) into the remaining blade ring (3, 5, 6, 7).

8. Method according to one of the preceding claims, wherein the joining of the new inner disk element (2) and the remaining blade ring (3, 5, 6, 7) is effected by means of electron-beam welding or rotary-friction welding.

## Revendications

1. Procédé de remplacement d'un élément intérieur (2) de disque d'un disque (1) à aubage intégré, ledit disque (1) à aubage intégré comportant une pluralité d'évidements (9) sous forme d'alésages axiaux traversants (9) dans la zone d'assemblage (8), ledit procédé comprenant les étapes suivantes :
comblement des alésages axiaux traversants (9),
séparation d'un élément intérieur (2) de disque du disque (1) à aubage intégré de la couronne d'aubes (3, 5, 6, 7) restante,
mise en place d'un nouvel élément intérieur (2) de disque dans la couronne d'aubes (3, 5, 6, 7) restante,
assemblage du nouvel élément intérieur (2) de disque et de la couronne d'aubes (3, 5, 6, 7) restante,
restauration des alésages axiaux traversants (9).

2. Procédé selon la revendication 1, où
le comblement des alésages axiaux traversants (9) est réalisé par mise en place de pièces moulées, et
la restauration des alésages axiaux traversants (9) par retrait des pièces moulées mises en place.

3. Procédé selon la revendication 2, où
les pièces moulées mises en place dans les alésages axiaux traversants (9) sont des pièces moulées contractées.

4. Procédé selon la revendication 2, où
les pièces moulées sont constituées du même matériau que l'élément intérieur (2) de disque.

5. Procédé selon la revendication 1, où
le comblement des alésages axiaux traversants (9) est réalisé au moyen du procédé cinétique de compactage à froid.

6. Procédé selon l'une des revendications 1 ou 5, où
la restauration des alésages axiaux traversants (9) est réalisée en perçant à nouveau ceux-ci.

7. Procédé selon l'une des revendications précédentes, où
un usinage de précision de la zone d'assemblage est effectué avant la mise en place du nouvel élément intérieur (2) de disque dans la couronne d'aubes (3, 5, 6, 7) restante.

8. Procédé selon l'une des revendications précédentes, où
l'assemblage du nouvel élément intérieur (2) de disque et de la couronne d'aubes (3, 5, 6, 7) restante est réalisé par soudage au faisceau d'électrons ou par soudage par friction.
